# FASCICULE DE BREVET EUROPEEN

(11) **EP 0 538 109 B1**
(45) Date de publication et mention de la délivrance du brevet: **11.12.1996**
(21) Numéro de dépôt: 92402780.8
(22) Date de dépôt: 12.10.1992
(51) Int. Cl.: H01H 9/16, H02J 13/00

(54) **Dispositif à contacts pour déterminer l'état d'un appareil**
Kontaktvorrichtung zur Bestimmung des Zustandes eines Gerätes
Contact device to determinate the status of an apparatus

(30) Priorité: 15.10.1991 FR 9112675
(43) Date de publication de la demande: 21.04.1993
(73) Titulaire: GEC ALSTHOM SA, 75116 Paris (FR)
(72) Inventeur: Ebersohl, Gérard, F-69350 La Mulatiere (FR)
(74) Mandataire: Fournier, Michel

(56) Documents cités:
- DD-A- 269 040
- DE-A- 3 941 319
- DE-B- 2 711 416
- FR-A- 2 004 735
- FR-A- 2 217 846
- FR-A- 2 536 903

## Description

La présente invention est relative à un dispositif permettant la détermination de l'état d'un appareil, et en particulier de l'état ouvert ou fermé d'un appareil de coupure électrique tel qu'un disjoncteur ou un sectionneur, à l'aide de contacts auxiliaires.

On rappelle qu'un contact auxiliaire est un appareil qui, dans le cas de l'utilisation pour un appareil de coupure, comprend un élément lié à la partie mobile de l'appareil de coupure et fournit un signal dépendant de la position de ladite partie mobile. Ce signal peut être un signal binaire, par exemple "1" lorsque l'appareil est "en position" (ouverte ou fermée), et "0" lorsque l'appareil quitte sa position. Il est connu également d'utiliser des contacts auxiliaires pour piloter convenablement les bobines de commande d'ouverture et de fermeture de l'appareil de coupure électrique.

Le document DE-A-2 711 416 décrit un dispositif pour la détermination de l'état d'un appareil pouvant prendre un premier et un second états, l'appareil étant muni de contacts auxiliaires fournissant des indication binaires "1" et "0" selon l'état actuel de l'appareil et fournissant, à l'aide d'un contrôleur, un signal représentatif de l'état de l'appareil.

L'utilisation d'un contact auxiliaire pour déterminer à distance la position d'un disjoncteur peut comporter des risques d'erreurs. En effet, un contact auxiliaire est un appareil sujet à évanouissement: fonctionnant peu, les contacts métalliques peuvent se recouvrir d'une couche d'oxyde; dans ce cas, le contact auxiliaire peut fournir une information erronée et conduire à la décision d'ouvrir un sectionneur alors que le disjoncteur qu'on croyait ouvert est resté fermé.

On a donc songé à améliorer la sécurité d'emploi des contacts auxiliaires en utilisant une redondance.

Par exemple, on dispose de deux contacts auxiliaires au lieu d'un et les informations qu'ils fournissent sont reçus sur un circuit de type OU, l'information prise en compte étant celle donnée à la sortie du circuit OU.

On observe que pour indiquer "en position", il suffit que l'un ou l'autre ou les deux contacts auxiliaires donnent "1". Si P est la probabilité de pannes d'un contact signal, la probabilité d'indiquer de manière erronée "en position" est PxP. Pour indiquer "hors position", il faut que les deux contacts auxiliaires indiquent "0"; la probabilité d'indiquer par erreur " hors position" est donc 2P.

On constate donc que la redondance passive avec deux contacts auxiliaires n'est pas la même pour les deux indications du contact auxiliaire et qu'en définitive elle ne résout pas le problème posé.

On a pensé utiliser une redondance passive avec trois contacts auxiliaires et une décision majoritaire deux parmi trois.

Pour indiquer "en position", il suffit que deux contacts auxiliaires indiquent "1". Les combinaisons acceptables pour conclure "en position" sont donc:
1 1 1
1 0 1
0 1 1
1 1 0

Pour indiquer "hors position", il suffit là encore que deux contacts auxiliaires indiquent "0". Les combinaisons acceptables pour conclure "hors position" sont donc:
0 0 0
0 0 1
1 0 0
0 1 0

La probabilité de défaillance simultanée de deux contacts auxiliaires étant PxP, on a la même sûreté de l'information "en position" et "hors position", à savoir PxP, mais ceci ne vaut que tant qu'il n'y a qu'un seul contact auxiliaire défaillant.

Par contre, à la deuxième panne, si l'on n'est pas intervenu pour réparer la première panne, on pourra tirer une conclusion erronée; par exemple si deux contacts auxiliaires restent collées à "1":
"en position" on lira 111, ce qui est correct,
"hors position" on lira 110, ce qui est incorrect, car en décision majoritaire 2 parmi 3, on conclura "en position".

On voit que la redondance passive décrite plus haut améliore beaucoup la disponibilité de la signalisation, mais de façon souvent insuffisante eu égard aux objectifs fixés de robustesse du système aux pannes multiples.

Or le problème existe de pouvoir surveiller à distance les appareils électriques et de pouvoir se fier à l'indication fournie par les contacts auxiliaires, de manière à pouvoir prendre des décisions d'exploitation de réseau sans risques.

Un but de l'invention est donc de définir un dispositif pour la détermination de la position d'un appareil à l'aide de contacts auxiliaires, permettant de fournir des indications fiables même lorsque certains des contacts auxiliaires sont défaillants. En effet, dans certaines conditions d'exploitation du réseau, par exemple dans des conditions climatiques extrêmes, il n'est pas toujours possible de dépanner un contact auxiliaire qui se déclare défaillant. Il est néanmoins indispensable de pouvoir connaître sans risque d'erreur la position de' l'appareil. Ce dispositif doit de plus assurer la commande correcte des actionneurs de l'appareil.

Un autre but de l'invention est de définir un dispositif pouvant fournir des informations lui permettant de s'autodiagnostiquer, en particulier en indiquant l'état sain ou défaillant des contacts auxiliaires de l'appareil. Ce dernier accroît ainsi sa disponibilité en permettant sa maintenance à bon escient.

Un autre but de l'invention est de définir un dispositif permettant d'améliorer la connaissance de l'appareil électrique utilisé au fur et à mesure de son utilisation, par exemple dans le cas d'un disjoncteur, de connaître les durées de manoeuvres; l'une de ces durées peut être le temps qui s'écoule entre le début de l'ordre qui est donné au disjoncteur et le départ de la position occupée; une autre durée peut correspondre au temps qui s'écoule entre le départ d'une position donnée et l'arrivée en position opposée. La connaissances de ces durées de manoeuvre permet de mieux prévoir la maintenance de l'appareil et de prévenir ses défaillances majeures.

L'invention a pour objet une méthode pour l'élaboration d'un signal déterminant l'état d'un appareil pouvant prendre un premier et un second états, l'appareil étant muni d'au moins un contact auxiliaire, dit contact auxiliaire du premier état, fournissant un signal d'état "1" lorsque l'appareil est dans le premier état, et d'au moins un contact auxiliaire, dit contact auxiliaire du deuxième état, fournissant un signal d'état "1" lorsque l'appareil est dans le deuxième état, l'appareil étant associé à un microcontrôleur programmé recevant sur des entrées les signaux d'état des contacts auxiliaires ainsi que les ordres demandant son passage d'un état à l'autre, et fournissant en sortie un signal représentatif de l'état et/ou de la disponibilité de l'appareil, caractérisée en ce que ledit signal est élaboré par un programme de mise en oeuvre d'une stratégie de continuité de service et de sécurité d'utilisation de l'appareil, le logiciel s'appuyant sur les conditions ci-après:
- si un contact auxiliaire change d'état sans qu'un ordre de changement d'état soit transmis au microcontrôleur, ce dernier considère le contact auxiliaire comme défaillant et ne prend plus son indication en compte,
- si, après qu'un ordre de changement d'état ait été transmis au microcontrôleur, un contact auxiliaire n'a pas changé d'état dans un délai donné, le microcontrôleur le considère comme défaillant et ne prend plus son indication en compte,
le logiciel prenant en outre en compte les états des contacts auxiliaires sains tels qu'ils apparaissent au moment de l'ordre de changement d'état, ainsi que l'ordre de changement d'état lui-même.

L'invention s'applique à l'électrotechnique et a pour objet, dans un exemple particulier de réalisation, une méthode de détermination de la position d'un appareil de coupure électrique tel qu'un disjoncteur ou un sectionneur ayant un pôle par phase, comprenant pour chacun des pôles des contacts auxiliaires fournissant des signaux numériques binaires, à savoir un signal "1" lorsque le contact auxiliaire est dans une position correspondant à un état ouvert ou fermé de l'appareil, et un signal "0" lorsque le contact auxiliaire quitte sa position, ledit pôle étant manoeuvré par l'intermédiaire d'une bobine d'ouverture et d'une bobine de fermeture, l'appareil comprenant, pour chaque pôle, un premier et un second groupe de n contacts auxiliaires, n étant un nombre entier au moins égal à 2, les contacts auxiliaires (CAO1, CAO2, CAO3) du premier groupe, appelés contacts auxiliaires ouverture, fournissant un signal "1" lorsqu'il détectent une position ouverte de l'appareil, les contacts auxiliaires (CAF1, CAF2, CAF3) du second groupe, appelés contacts signaux fermeture, fournissant un "1" lorsqu'ils détectent une position fermée de l'appareil, lesdits contacts auxiliaires étant reliés à un microprocesseur programmé (MP) recevant également une information (OO) correspondant à un ordre d'ouverture de l'appareil et une information (OF) correspondant à un ordre de fermeture de l'appareil, ledit microprocesseur ayant une sortie (CDO) de commande de la bobine d'ouverture du pôle, une sortie (CDF) de commande de la bobine de fermeture du pôle, une sortie (PF) fournissant un signal "appareil fermé", une sortie (PO) fournissant un signal "appareil ouvert", des sorties (MACAO, MACAF) fournissant des indications sur la disponibilité des contacts auxiliaires des premier et second groupes, une sortie (MFCA) fournissant un signal indiquant la défaillance majeure de l'un des groupes de contacts auxiliaires et une sortie (MFP) fournissant une information indiquant la défaillance majeure du pôle, la stratégie du programme étant établie de telle sorte que:
- un contact auxiliaire qui, à la suite d'un ordre d'ouverture ou de fermeture, n'a pas changé d'état dans un délai donné, est considéré comme défaillant et n'est plus pris en considération par le programme,
- un appareil est déclaré ouvert en fin de séquence d'ouverture, si, à l'issue de cette séquence d'ouverture, l'un des cas suivants se présente:
   - les n contacts auxiliaires fermeture et les n contacts auxiliaires ouverture sont sains et ont changé d'état convenablement, un contact auxiliaire ouverture passant de "1" à "0", un contact auxiliaire fermeture passant de "0" à "1",
   - au moins un contact auxiliaire fermeture est sain et au moins un contact auxiliaire ouverture a changé d'état convenablement,
      - les n contacts auxiliaires ouverture sains ont changé d'état alors que les n contacts auxiliaires fermeture sont tous défaillants (défaillance majeure de contacts auxiliaires correspondant à l'émission d'un signal MCFA = 1),
      - les n contacts auxiliaires fermeture sains ont changé d'état alors que les n contacts auxiliaires ouverture sont défaillants (défaillance majeure de contacts auxiliaires correspondant à l'émission d'un signal MCFA = 1),
- un appareil est déclaré fermé en fin de séquence de fermeture, si, à l'issue de cette séquence de fermeture, l'un des cas suivants se présente:
   - au moins un contact auxiliaire ouverture sain a changé d'état en cas de défaillance de tous les contacts auxiliaires fermeture en cours d'opération,
   - au moins un contact auxiliaire fermeture sain a changé d'état en cas de défaillance de tous les contacts ouverture en cours d'opération,
le programme étant en outre agencé pour que:
- un groupe de contacts soit déclaré défaillant (défaillance majeure d'un groupe de contacts auxiliaires correspondant à un signal MFCA = 1) si, lors d'une manoeuvre d'ouverture ou de fermeture de l'appareil, aucun des contacts auxiliaires du groupe n'a changé d'état après une première temporisation (TIMEO) suivant l'ordre de manoeuvre, alors que dans le même laps de temps, un changement convenable a été observé pour les contacts auxiliaires de l'autre groupe,
- un contact auxiliaire soit déclaré non sain si, au cours d'une séquence d'ouverture ou de fermeture de l'appareil, après qu'un contact auxiliaire du même groupe ait changé d'état convenablement, il n'ait pas changé d'état à l'expiration d'une seconde temporisation (TIME1) initiée par le changement d'état précédent.

Avantageusement, les contacts auxiliaires sont dotés de moyens d'auto-diagnostic et fournissent des signaux (ADO1, ADO2, ADO3, ADF1, ADF2, ADF3) adressés à des entrées du microcontrôleur.

Avantageusement, le programme est agencé pour qu'à l'état de veille, une information " appareil ouvert" soit donnée lorsque l'un des cas ci-après est présent:
- les n contacts auxiliaires ouverture sont sains et à l'état "1", les n contacts auxiliaires fermeture sont sains et à l'état "0",
- au moins un contact auxiliaire ouverture est sain et à l'état "1" et au moins un contact auxiliaire fermeture est sain et à l'état "0",
- les n contacts auxiliaires ouverture sont sains et à l'état "1" si tous les contacts auxiliaires fermeture sont défaillants,
- les n contacts auxiliaires fermeture sont sains et à l'état "0" si tous les contacts auxiliaires ouverture sont défaillants

De la même manière, le programme est agencé pour qu'à l'état de veille, une information "appareil fermé" soit donnée lorsque l'un des cas ci-après est présent:
- au moins un contact auxiliaire fermeture est sain et à l'état "1"
- au moins un contact auxiliaire ouverture est sain et à l'état "0".

Le programme est agencé pour verrouiller l'appareil en position "appareil ouvert" et pour signaler "appareil défaillant", lorsque l'état des contacts auxiliaires ne correspond à aucun des cas permettant d'afficher "appareil ouvert".

De la même manière, le programme est agencé pour verrouiller l'appareil en position "appareil fermé " et pour signaler "appareil défaillant", lorsque l'état des contacts auxiliaires ne correspond à aucun des cas permettant d'afficher "appareil fermé".

Le programme est élaboré de manière que:
- lorsqu'un ordre d'ouverture (OO) ou de fermeture (OF) est donné au temps origine (t0), une première fenêtre temporelle de surveillance ayant une première durée (TIME0) est lancée par un premier temporisateur (TEMPO1) et conjointement un premier chronomètre (Chr0) est démarré,
- lorsque le premier des contacts auxiliaires d'un premier groupe change d'état (un contact signal ouverture pour un ordre d'ouverture et un contact signal fermeture pour un ordre de fermeture) au premier temps (t1), une seconde fenêtre temporelle ayant une seconde durée (TIME1) à l'aide d'un second temporisateur (TEMPO1) est ouverte et, conjointement, on stoppe le premier chronomètre (Chr0), on met en mémoire la durée qu'il indique correspondant à la durée de décollage à partir du repos, et on démarre un second chronomètre (Chr1),
- à l'expiration de la seconde durée (TIME1), à l'instant t2, les contacts auxiliaires dudit premier groupe ont pu changer d'état et ces états résultants sont mémorisés pour être analysés,
- lorsque le premier contact signal du second groupe change d'état au troisième temps (t3), ladite seconde fenêtre temporelle de seconde durée (TIME1) est relancée à l'aide dudit second temporisateur (TEMPO1) et conjointement, on stoppe le second chronomètre (Chr1) et on met en mémoire la durée qu'il indique utilisable pour déterminer la vitesse moyenne des contacts de l'appareillage,
- à l'expiration du second délai (TIME1), tous les contacts auxiliaires valides du second groupe ont pu changer d'état, et les états résultants sont mémoriséspour être analysés,
- un contact auxiliaire du premier ou du second groupe est déclaré défaillant si, au terme de la seconde fenêtre temporelle (TIME1) y relative, il n'a pas changé d'état,
- un groupe de contact auxiliaires étant déclaré en défaillance majeure si, au terme de la première fenêtre temporelle (TIME0), aucun des contacts auxiliaire de ce groupe n'a changé d'état alors qu'un changement d'état convenable a été constaté dans le groupe opposé.

Le programme comprend un premier sous-programme de marche dégradée (marche dégradée1), qui:
- lors d'un processus d'ouverture de l'appareil, après avoir constaté que la séquence a été initiée par le changement d'état d'un contact auxiliaire fermeture et qu'aucun des contacts auxiliaires ouverture n'a changé d'état à l'issue de la première fenêtre temporelle (TIME0), entraîne l'apparition d'un signal de défaillance de l'appareil (MFP = 1),
- lors d'un processus d'ouverture de l'appareil, après avoir constaté que la séquence n'a pas été initiée par le non changement d'état à l'issue de la première fenêtre temporelle des contacts auxiliaires fermeture, entraînera l'apparition d'un signal "appareil ouvert" (PO = 1) si les trois contacts auxiliaires ouverture ont changé d'état,et conjointement, on signale la défaillance majeure des contacts auxiliaires fermeture (MACAF = 1, MFCA = 1),
- lors d'un processus d'ouverture de l'appareil, après avoir constaté que la séquence n'a pas été initiée par le non changement d'état à l'issue de la première fenêtre temporelle des contacts auxiliaires fermeture, et ayant constaté le non changement d'état des contacts auxiliaire ouverture sains, entraînera l'apparition d'un signal de défaillance de l'appareil (MFP = 1) et de verrouillage de toute ordre ultérieur,
- lors d'un processus de fermeture de l'appareil, après avoir constaté que la séquence a été initiée par le changement d'état d'un contact auxiliaire ouverture et qu'aucun des contacts auxiliaires fermeture n'a changé d'état à l'issue de la première fenêtre temporelle (TIME0), entraîne l'apparition du signal "appareil fermé", la seconde durée étant prise égale à la durée de la première fenêtre temporelle (TIME0),
- lors d'un processus de fermeture de l'appareil, après avoir constaté une défaillance majeure des contacts auxiliaire fermeture, entraîne l'apparition d'un signal "appareil fermé" si l'un des contacts auxiliaires ouverture a changé d'état,
- lors d'un processus de fermeture de l'appareil, après avoir constaté une défaillance majeure des contacts auxiliaires fermeture, et constaté qu'aucun des contacts signaux ouverture sains n'a changé d'état, déclarera "appareil défaillant" , prendra la première durée (T1) égale à la durée de la première fenêtre temporelle (TIME0), prendra la seconde durée (T2) égale à la capacité maximale dudit troisième chronomètre (FFFF) et commandera la mise en route d'un troisième programme de marche dégradée ("marche dégradée3).

Le programme comprend un second sous-programme de marche dégradée ("marche dégradée2"), pour déterminer la position de l'appareil à l'état de veille, lorsque tous les contacts auxiliaires ouverture et/ou tous les contacts auxiliaires fermeture sont défaillants, ledit second sous-programme étant agencé pour que:
- le dernier ordre donné enregistré étant un ordre d'ouverture, le dispositif ne confirme l'état "appareil ouvert" que si au moins tous les contacts auxiliaires d'un groupe sont sains,
- le dernier ordre donné enregistré étant un ordre de fermeture, le dispositif indique "appareil fermé" si au moins un contact auxiliaire fermeture sain est à "1" ou si au moins un contact auxiliaire ouverture sain est à "0",
- si tous les contacts auxiliaires ouverture et tous les contacts auxiliaires fermeture sont défaillants, le dispositif indique "appareil défaillant" et condamne toute manoeuvre ultérieure.

Le programme comporte un troisième sous-programme de marche dégradée "marche dégradée3", pour détecter les défaillances de l'appareil et commander des verrouillages de tous les ordres ultérieurs et la signalisation "appareil défaillant".

Dans un mode particulier de réalisation de l'invention, le nombre n de contacts auxiliaires de chaque groupe est égal à 3.

L'invention est maintenant expliquée de manière détaillée en référence à un exemple de réalisation décrit en référence au dessin ci-annexé dans lequel:

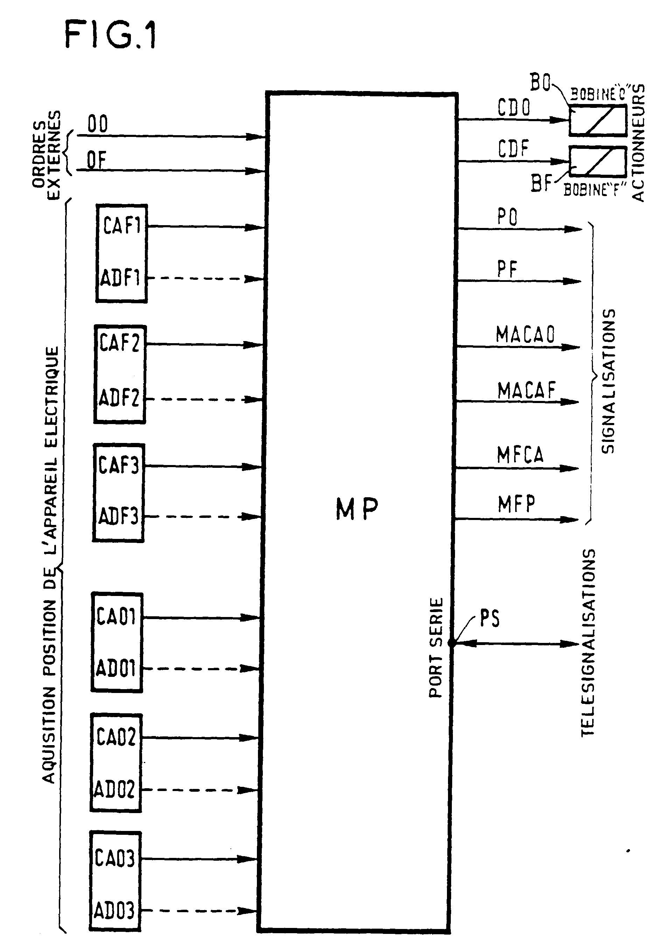

- la figure 1 est un schéma du dispositif de l'invention, appliqué à la detection de l'état ouvert ou fermé d'un pôle d'un appareil électrique de coupure tel qu'un disjoncteur,
- la figure 2 est un diagramme montrant la séquence de fermeture normale d'un pôle de disjoncteur.

Dans l'exemple donné, on se référera à la surveillance de l'état d'un pôle d'un disjoncteur à haute tension. Dans le cas habituel d'un disjoncteur triphasé, le dispositif décrit plus loin devra naturellement être réalisé en trois exemplaires, un pour chacun des pôles du disjoncteur.

Dans l'exemple choisi, le nombre n de contacts auxiliaires par groupe a été choisi égal à 3.

Le dispositif de l'invention est articulé autour d'un microcontrôleur MP, par exemple un circuit 80C31 de la marque INTEL.

Le microprocesseur MP reçoit les signaux d'un premier groupe de contacts auxiliaires CAO1, CAO2, CAO3, placés au voisinage du pôle et fournissant chacun, lorsqu'ils sont sains, un signal "1" lorsque le pôle est en position ouverte et un signal "0" lorsqu'il abandonne cette position. On appellera mot d'état du groupe des contacts auxiliaires ouverture (en abrégé dans la suite: CAO), la suite de nombre correspondant aux signaux fourni par ce groupe. Ainsi, le mot d'état du groupe CAO est 111 lorsque tous les contacts auxiliaires du groupe sont sains et que le pôle est ouvert.

Le microcontrôleur reçoit également, de préférence mais facultativement, des signaux ADO1, ADO2, ADO3 relatifs à l'autodiagnostic de santé effectué respectivement par les contacts auxiliaires d'ouverture CAO1, CAO2 et CAO3. Le signal est par exemple un signal binaire "1" lorsque le contact auxiliaire se juge sain et un signal binaire "0" losqu'il se juge défaillant.

Le microprocesseur MP reçoit également les signaux d'un second groupe des contacts auxiliaires CAF1, CAF2, CAF3 placés au voisinage du pôle et fournissant chacun, lorsqu'ils sont sains, un signal "1" lorsque le pôle est fermé et un signal zéro lorsqu'ils abandonnent cette position. Le mot d'état du second groupe est donc 111 lorsque tous les contacts auxiliaires fermeture (en abrégé dans la suite: CAF) sont sains et que le pôle est fermé.

Le microcontrôleur reçoit également les signaux ADF1, ADF2 et ADF3 d'autodiagnostic des CAF, s'il est prévu qu'il reçoive les signaux d'autodiagnostic des CAO.

Le microprocesseur MP reçoit sur une entrée un signal OO correspondant à un ordre d'ouverture du pôle et sur une autre entrée, un ordre OF. correspondant à un ordre de fermeture du pôle.

Le microprocesseur fournit sur deux sorties des signaux PO et PF signifiant respectivement "pôle ouvert" et "pôle fermé", ces signaux étant élaborés par l'application du programme contenu dans le microprocesseur. Par ailleurs, il délivre des ordres CDO et CDF adressés respectivement aux bobines d'ouverture BO et de fermeture BF du pôle, des informations MACAO et MACAF relatives à la disponibilité maximale des CAO et des CAF respectivement, une information MFCA relative à la défaillance majeure d'un groupe de contacts auxiliaires, et une information MFP indiquant -une défaillance majeure du pôle. Le microcontrôleur possède un port série PS utilisé pour la télésignalisation avec l'environnement du poste dans lequel est placé l'appareil de coupure.

Le principe d'élaboration du programme et de fonctionnement du dispositif est décrit maintenant.

Le programme de fonctionnement du microprocesseur est prévu pour fournir des informations certaines sur l'état ouvert ou fermé du pôle, même si certains des CSO ou des CSF sont défaillants; c'est ce qu'on appelle la marche dégradée, qui permet d'obtenir une information certaine sur l'état du pôle, en attendant que les CSO ou les CSF défaillants soient réparés. Les principes utilisés sont les suivants:
- à chaque instant, la dernière bonne position du pôle est connue, car elle est mémorisée, ainsi que les ordres OO et OF,
- à chaque acquisition d'une donnée OO, OF, CAO, CAF, faite périodiquement, par exemple toutes les millisecondes, par un sous-programme d'interruption au moyen d'une horloge en temps réel du microcontrôleur, on peut donc savoir si, à l'état de veille du pôle, celui-ci est ouvert ou fermé,
- si, lors de l'état de veille, un contact auxiliaire change d'état, il est déclaré défaillant et le programme ne le prendra plus en compte ultérieurement,
- si un ordre d'ouverture ou de fermeture du pôle est donné, une temporisation est lancée: si, avant l'échéance de cette temporisation, l'un des contacts auxiliaire a changé d'état, on conclut que ce contact auxiliaire est passé de sa position de repos antérieur à la position hors position. On lance alors une courte temporisation pour permettre aux autres contacts auxiliaires du même groupe de prendre leur état final. On note leur état dans un masque de surveillance, chaque groupe de contacts auxiliaires (en abrégé dans la suite: CA) ayant le sien. Lorsque tous les CA sont bons, ces masques valent 111 pour le masques de surveillance des CAO et 111 pour le masque de surveillance des CAF. Les sorties MACAO et MACAF du microcontrôleur sont alors à "1". A chaque acquisition des CA, leurs mots d'état lorsqu'ils sont réputés fermés, ou le complément de leur mot d'état lorsqu'ils sont réputés ouverts, subissent un ET logique avec leur masque de surveillance, de sorte que seuls les CA valides interviennent dans l'analyse de position et dans l'analyse de leurs transitions attendues. Ce sont donc les CA valides qui seront nommés dans la suite de ce texte.

On déclarera état de veille pôle ouvert dans les cas suivants:
- les trois CAO sont bons à "1", les trois CAF sont bons à "0",
- au moins un CAO est bon et à "1" et au moins un CAF est bon et à "0",
- les trois CAF sont bons et à "0" si tous les CAO sont défaillants,
- les trois CAO sont bons à "1" si tous les CAF sont défaillants.

Dans tous les autres cas on déclarera pôle ni ouvert, ni fermé , défaillance pôle et verrouillage en position.

On déclarera état de veille pôle fermé pourvu qu'au moins un CAF soit bon et à "1", ou qu'un CAO soit bon et à "0". Dans les autres cas, on dira pôle ni ouvert, ni fermé, défaillance pôle et verrouillage en position.

Pour un opération d'ouverture du pôle, l'information "pôle ouvert" ne sera donnée en fin de séquence que dans les cas suivants:
- les trois CAF bons sont passés de "1" à "0",
- au moins un CAF bon est passé de "1" à "0" et un CAO bon est passé de "0" à "1",
- les trois CAO bons sont passés de "0" à "1" alors qu'une défaillance majeure s'est produite sur les trois CAF,
- les trois CAF bons sont passés de "1" à "0" alors qu'une défaillance majeure s'est produite sur les trois CAO.

Pour une opération de fermeture du pôle, l'information "pôle fermé" ne sera donnée en fin de séquence dans les cas suivants:
- si un CAO bon est passé de "1" à "0" en cas de défaillance majeure des trois CAF en cours d'opération,
- si un CAF bon est passé de "0" à "1" en cas de défaillance majeure des trois CAO en cours d'opération.

On note que les conditions en marche dégradée sont plus sévères pour affirmer une position ouverte qu'une position fermée, ce qui se comprend aisément pour des questions de sécurité. En outre, l'information pôle fermé est plus facile à vérifier que la position pôle ouvert, en raison de la présence de courant et de tension détectable par d'autres moyens.

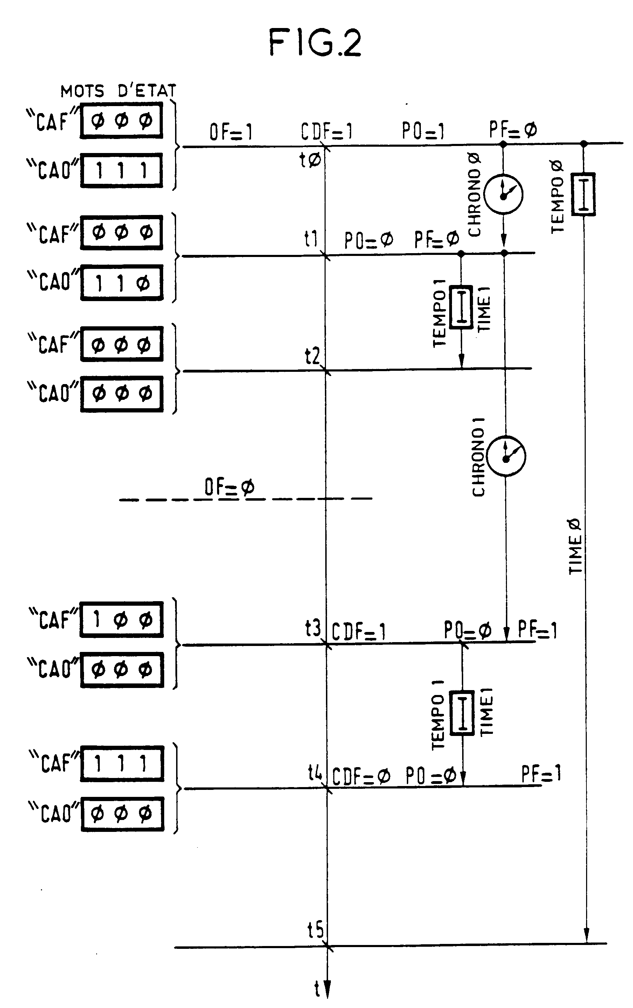

La figure 2 est un diagramme expliquant le fonctionnement du dispositif lors d'une opération de fermeture du pôle. On émet l'hypothèse qu'à l'état de veille précédent l'ordre d'ouverture OO, le pôle est sain, ainsi que tous les contacts signaux CAO et CAF.

L'exemple donné est celui d'une fermeture du pôle, mais la séquence qu'on va décrire est identique, mutatis mutandis, lors d'une opération d'ouverture du pôle à partir d'un état fermé.

Dans ce qui suit, lorsqu'il sera question de temporisateurs ou de chronomètres, il est bien entendu que ces notions correspondent à des traitements au moyen de logiciel.

Le pôle étant donc supposé ouvert à l'origine, le mot d'état des CAO est 111 et le mot d'état des CSAF est 000. A l'instant t0 où un ordre de fermeture OF est donné au pôle et mémorisé, un premier temporisateur TEMPO0déclenche une première fenêtre temporelle de durée donnée TIME0; simultanément, un premier chronomètre CHRONO0 est démarré, la commande CDF donnant l'ordre de fermeture à la bobine de fermeture est activée à "1", initiant la fermeture du pôle; la sortie PO est "1", la sortie "PF" est à "0".

Lorsqu'à l'instant t1, le premier des CAO passe à "0", on ouvre, à l'aide d'un second temporisateur TEMPO1, une seconde fenêtre temporelle de durée TIME1 pendant laquelle on escompte le passage à "0" des autres CAO; simultanément, on stoppe le chronomètre CHRONO0, puis on range en mémoire la première durée T1 égale à t1 - t0, et on démarre un second chronomètre CHRONO1. On observe, à l'instant t2, le passage à "0" du dernier des CAO, puis on mémorise leur nouveau masque d'état. On arrête le temporisateur TEMPO1. Si à l'expiration de la temporisation TIME1, les autres CAO n'avaient pas changé d'état, ils seraient déclarés défaillants, et les bits correspondant à leur masque d'état seraient mis à zéro.

On attend le basculement de "0" à "1" du premier des CAF, qui survient à l'instant t3. On arrête le chronomètre CHRONO1 et on mémorise la durée indiquée T2 = t3 - t1, qui correspond sensiblement à la durée de la course du contact mobile du pôle;l'observation des évolutions de T1 et T2 fournit de précieux renseignements sur le bon fonctionnement de l'appareil et permet de planifier la maintenance. Au même instant t3, on fait repartir le temporisateur TEMPO1 qui ouvre une fenêtre temporelle de durée TIME1, et on attend le basculement des deux autres CAF. Lorsqu'au temps t4 le dernier des CAF a basculé, on mémorise le nouveau masque d'état des CAF; l'information "pôle fermé" (PF = 1) est émise. Si, à l'issue de cette seconde fenêtre, l'un ou l'autre des autres CAF n'avait pas changé d'état, il aurait été déclaré défaillant, et le bit correspondant de son nouveau masque d'état serait mis à "0". Simultanément, la commande CDF est mise à "0". Si en outre, à l'issue de la fenêtre temporelle TIME0, les contacts auxiliaires d'un groupe n'avaient pas changé d'état, ce groupe aurait été considéré comme faisant l'objet d'une défaillance majeure (signal "1" sur la sortie MFCA du microcontrôleur), si au moins un CA de l'autre groupe avait changé d'état convenablement.

A l'instant t5 correspondant à la fermeture de la fenêtre temporelle TIME0 du temporisateur TEMPO0, le microprocesseur émet, après avoir analysé les masques d'état des deux groupe de contacts auxiliaires et détecté d'éventuelles défaillances majeures, les informations de disponibilité des CA sur ses sorties MACAO, MACAF et MFCA, et l'éventuelle défaillance majeure du pôle MFP. On notera que si les CA étaient tous défaillants, c'est à l'instant t5 que la commande CDF (dans le cas d'une fermeture du pôle) ou CDO (dans le cas d'une ouverture du pôle), serait ramenée à "0" pour éviter la destruction par effet Joule des bobines de commande.

On notera que la séquence décrite précédemment a permis de recueillir des informations précieuses qui seront utilisées pour l'autodiagnostic du pôle: la connaissance des durées T1 et T2 permet, au fil des manoeuvres, de surveiller l'état de fonctionnement du pôle et de prévenir les défaillances. En pratique, on mémorisera dans le microprocesseur les durées correspondants aux deux dernières opérations réalisées, ce qui permet en particulier d'observer ultérieurement les éventuelles dérives de ces temps opératoires..

Le sous-programme marche dégradée traite les anomalies détectées pendant l'état de veille (défaillance totale d'un groupe de CAF ou de CAO) ou détectées pendant l'exécution d'un ordre d'ouverture ou de fermeture, caractérisé par l'arrivée ou l'absence de transition d'un contact auxiliaire à l'échéance de la temporisation TIME0 initiée à réception d'un ordre.

Le sous-programme "marche dégradée" est subdivisé en plusieurs routines.

La routine "marche dégradée 1" traite les situations liées à l'apparition de défaillances majeures de groupes de contacts auxiliaires en cours d'opération. Ces défaillances majeures apparaissent au terme de la temporisation TIME0. On rappelle les règles dans ces cas:
- opération d'ouverture:
   1er cas: l'opération a bien été initiée car on a constaté le basculement d'au moins un CAF. La défaillance majeure est due aux trois CAO; dans ce cas, si les trois CAF ont basculé, on pourra dire "pôle ouvert avec un risque très faible. On notera que la durée T2 n'est pas mesurable et on lui attribuera la valeur TIME0.
   2ème cas: l'opération n'a pas été initiée
      La défaillance majeure est due aux trois CAF en panne. Si les trois CAO sains ont subi la transition, on conclura "pôle ouvert". Si les trois CAO bons n'ont pas vu la transition, on a alors une défaillance du pôle et on signale pôle ni ouvert, ni fermé et on verrouille tout ordre jusqu'à remise en ordre du pôle. (CDO = "0" et "CDF = "0"). On note que le temps T1 est en principe infini puisqu'il n'y a pas eu initialisation du processus. On attribue à T1 une valeur correspondant à la capacité maximale :FFFF du chronomètre; quant à T2, on le prend égal à TIME0, ce qui est une valeur par excès, faute de mieux.
- opération de fermeture:
   1er cas:
      l'opération a bien été initiée, car on a constaté la transition d'au moins un CAO. La défaillance majeure est donc due à la défaillance majeure des CAF. La probabilité de défaillance mécanique du pôle étant faible, on conclura à la fermeture du pôle. Comme précédemment, on prendra T2 égal à TIME0.
   2ème cas:
      l'opération n'est pas initiée;cela peut être dû soit à la défaillance majeure des trois CAO, soit à la défaillance du pôle. Dans ce cas, si au moins un CAF bon a subi une transition, on pourra conclure à la fermeture du pôle. Dans le cas contraire, on conclura à la défaillance du pôle et on déclenchera une stratégie de réouverture contrôlée par la routine marche dégradée 3 qui sera décrite plus loin. On dira pôle ni ouvert, ni fermé. On prendra T1 égal à :FFFF et T2 égal à TIME0.

La routine "marche dégradée 2" essaye de déterminer la position à l'état de veille lorsque tous les CAO et/ou tous les CAF sont défaillants. Si cette détermination n'est pas possible, on n'indique aucune position du pôle et on interdit toute manoeuvre ultérieure.

Il faut distinguer trois cas:
cas n°1:
   L'ordre mémorisé dans le bit mémoire OO est 1; cela signifie que le pôle est ouvert. Pour la sécurité des personnes, on ne confirmera cette position ouverte du pôle que si au moins tous les contacts auxiliaires d'un groupe (ou tous les CAO ou tous les CAF) sont bons.
cas n°2:
   L'ordre mémorisé dans le bit mémoire OO est 0; cela signifie que le dernier ordre donné était un ordre de fermeture. On conclura "pôle fermé" si au moins un CAF bon est à "1" ou si au moins un CAO bon est à "0".
cas n°3:
   Tous les CAO et tous les CAF sont défaillants: on décrétera une défaillance du pôle; on ne signalera aucune position et on condamnera toute manoeuvre ultérieure.

La routine "marche dégradée 3" traite la défaillance du pôle: celle-ci peut être détectée en cours d'opération ou à l'état de veille. Dans tous les cas, on signale pôle ni ouvert, ni fermé et on interdit toute opération ultérieure par l'émission sur les sorties CDO et CDF des signaux correspondant au verrouillage des bobines de commande.

Si la défaillance pôle intervient sur un ordre de fermeture, le microprocesseur va tenter une ouverture du pôle pendant une durée égale à TIME0, pour essayer de rouvrir le pôle et de ne pas le laisser en position intermédiaire, position dans laquelle la tenue diélectrique entre contacts est réduite. un réamorçage entre les contacts du disjoncteur serait en effet destructif.

Si la défaillance du pôle est détectée pendant la veille, on ne fait ne fait rien de plus que les verrouillages et signal isations ci-dessus.

Bien entendu, les stratégies décrites ci-dessus ne sont données qu'à titre d'exemple; les stratégies décrites en cas de dégradations graves peuvent être différentes suivant le degré de risque que l'exploitant accepte pour ces signalisations. On peut, pour l'état ouvert, renforcer encore la signalisation en imposant n contacts auxiliaires sains dans un groupe et un contact auxiliaire sain dans le groupe opposé. Si, par contre, la continuité du service doit être très importante, on peut alléger les critères de signalisation pôle ouvert. Ces stratégies sont donc un exemple de ce que le concept d'un système programmé associé à des contacts auxiliaires permet de faire.

L'appareil de l'invention apporte une grande contribution au développement des postes à autocontrôle et surveillance à distance, grâce à une sûreté de fonctionnement et par l'acquisition de données précieuses pour l'établissement d'une maintenance active des appareils.

L'invention n'est pas limitée aux applications de l'électrotechnique dont un exemple d'application a été décrit. Elle s'applique à toutes les branches de l'industrie et peut être mise en oeuvre toutes les fois qu'il s'agit de déterminer, en fonction d'une stratégie liée à la fois à la continuité du service et à la sécurité du matériel et des personnes, l'état d'un appareil ou d'une machine, en fonction des indications données par des capteurs pouvant fournir des informations erronées, en cas de défaillance.

## Revendications

1. Méthode d'élaboration d'un signal déterminant l'état d'un appareil pouvant prendre un premier et un second états, l'appareil étant muni d'au moins un contact auxiliaire, dit contact auxiliaire du premier état, fournissant un signal d'état "1" lorsque l'appareil est dans le premier état, et d'au moins un contact auxiliaire, dit contact auxiliaire du deuxième état, fournissant un signal d'état "1" lorsque l'appareil est dans le deuxième état, l'appareil étant associé à un microcontrôleur programmé recevant sur des entrées les signaux d'état des contacts auxiliaires, ainsi que les ordres demandant son passage d'un état à l'autre, et fournissant en sortie un signal représentatif de l'état et/ou de la disponibilité de l'appareil, caractérisée en ce que ledit signal est élaboré par un programme de mise en oeuvre d'une stratégie de continuité de service et de sécurité d'utilisation de l'appareil, le logiciel s'appuyant sur les conditions ci-après:
- si un contact auxiliaire change d'état sans qu'un ordre de changement d'état soit transmis au microcontrôleur, ce dernier considère le contact auxiliaire comme défaillant et ne prend pas son indication en compte,
- si, après qu'un ordre de changement d'état ait été transmis au microcontrôleur, un contact auxiliaire n'a pas changé d'état dans un délai donné, le microcontrôleur le considère comme défaillant et ne prend pas son indication en compte,
le logiciel prenant en outre en compte les états des contacts auxiliaires sains tels qu'ils apparaissent au moment de l'ordre de changement d'état, ainsi que l'ordre de changement d'état lui-même.

2. Méthode pour la détermination de la position d'un appareil de coupure électrique tel qu'un disjoncteur ou un sectionneur ayant un pôle par phase, comprenant pour chacun des pôles des contacts auxiliaires fournissant des signaux numériques binaires, à savoir un signal "1" lorsque le contact auxiliaire est dans une position correspondant à un état ouvert ou fermé de l'appareil, et un signal "0" lorsque le contact auxiliaire quitte sa position, ledit pôle étant manoeuvré par l'intermédiaire d'une bobine d'ouverture et d'une bobine de fermeture, l'appareil comprenant, pour chaque pôle, un premier et un second groupe de n contacts auxiliaires, n étant un nombre entier au moins égal à 2, les contacts auxiliaires (CAO1, CAO2, CAO3) du premier groupe, appelés contacts auxiliaires ouverture, fournissant un signal "1" lorsqu'il détectent une position ouverte de l'appareil, les contacts auxiliaires (CAF1, CAF2, CAF3) du second groupe, appelés contacts signaux fermeture, fournissant un "1" lorsqu'ils détectent une position fermée de l'appareil, lesdits contacts auxiliaires étant reliés à un microprocesseur programmé (MP) recevant également une information (OO) correspondant à un ordre d'ouverture de l'appareil et une information (OF) correspondant à un ordre de fermeture de l'appareil, ledit microprocesseur ayant une sortie (CDO) de commande de la bobine d'ouverture du pôle, une sortie (CDF) de commande de la bobine de fermeture du pôle, une sortie (PF) fournissant un signal "appareil fermé", une sortie (PO) fournissant un signal "appareil ouvert", des sorties (MACAO, MACAF) fournissant des indications sur la disponibilité des contacts auxiliaires des premier et second groupes, une sortie (MFCA) fournissant un signal indiquant la défaillance majeure de l'un des groupes de contacts auxiliaires et une sortie (MFP) fournissant une information indiquant la défaillance majeure du pôle, la stratégie du programme étant établie de telle sorte que:
- un contact auxiliaire qui, à la suite d'un ordre d'ouverture ou de fermeture, n'a pas changé d'état dans un délai donné, est considéré comme défaillant et n'est plus pris en considération par le programme,
- un appareil est déclaré ouvert en fin de séquence d'ouverture, si, à l'issue de cette séquence d'ouverture, l'un des cas suivants se présente:
- les n contacts auxiliaires fermeture et les n contacts auxiliaires ouverture sont sains et ont changé d'état convenablement, un contact auxiliaire ouverture passant de "1" à "0", un contact auxiliaire fermeture passant de "0" à "1",
- au moins un contact auxiliaire fermeture est sain et au moins un contact auxiliaire ouverture a changé d'état convenablement,
- les n contacts auxiliaires ouverture sains ont changé d'état alors que les n contacts auxiliaires fermeture sont tous défaillants (défaillance majeure de contacts auxiliaires correspondant à l'émission d'un signal MCFA = 1),
- les n contacts auxiliaires fermeture sains ont changé d'état alors que les n contacts auxiliaires ouverture sont défaillants (défaillance majeure de contacts auxiliaires correspondant à l'émission d'un signal MCFA = 1),
- un appareil est déclaré fermé en fin de séquence de fermeture, si, à l'issue de cette séquence de fermeture, l'un des cas suivants se présente:
- au moins un contact auxiliaire ouverture sain a changé d'état en cas de défaillance de tous les contacts auxiliaires fermeture en cours d'opération,
- au moins un contact auxiliaire fermeture sain a changé d'état en cas de défaillance de tous les contacts ouverture en cours d'opération,
le programme étant en outre agencé pour que:
- un groupe de contacts soit déclaré défaillant (défaillance majeure d'un groupe de contacts auxiliaires correspondant à un signal MFCA = 1) si, lors d'une manoeuvre d'ouverture ou de fermeture de l'appareil, aucun des contacts auxiliaires du groupe n'a changé d'état après une première temporisation (TIME0) suivant l'ordre de manoeuvre, alors que dans le même laps de temps, un changement convenable a été observé pour les contacts auxiliaires de l'autre groupe,
- un contact auxiliaire soit déclaré non sain si, au cours d'une séquence d'ouverture ou de fermeture de l'appareil, après qu'un contact auxiliaire du même groupe ait changé d'état convenablement, il n'ait pas changé d'état à l'expiration d'une seconde temporisation (TIME1) initiée par le changement d'état précédent.

3. Méthode selon l'une des revendications 1 et 2, caractérisé en ce que les contacts auxiliaires (CAO1, CAO2, CAO3, CAF1, CAF2, CAF3) sont dotés de moyens d'auto-diagnostic et fournissent des signaux (ADO1, ADO2, ADO3, ADF1, ADF2, ADF3) adressés à des entrées du microcontrôleur.

4. Méthode selon l'une des revendications 2 et 3, caractérisé en ce que le programme est agencé pour qu'à l'état de veille, une information "appareil ouvert" soit donnée lorsque l'un des cas ci-après est présent:
- les n contacts auxiliaires ouverture sont sains et à l'état "1", les n contacts auxiliaires fermeture sont sains et à l'état "0",
- au moins un contact auxiliaire ouverture est sain et à l'état "1" et au moins un contact auxiliaire fermeture est sain et à l'état "0",
- les n contacts auxiliaires ouverture sont sains et à l'état "1" si tous les contacts auxiliaires fermeture sont défaillants,
- les n contacts auxiliaires fermeture sont sains et à l'état "0" si tous les contacts auxiliaires ouverture sont défaillants.

5. Méthode selon l'une des revendications 2 à 4, caractérisé en ce que le programme est agencé pour qu'à l'état de veille, une information "appareil ouvert" soit donnée lorsque l'un des cas ci-après est présent:
- les n contacts auxiliaires ouverture sont sains et à l'état "1", les n contacts auxiliaires fermeture sont sains et à l'état "0",
- au moins un contact auxiliaire ouverture est sain et à l'état "1" et au moins un contact auxiliaire fermeture est sain et à l'état "0",
- les n contacts auxiliaires ouverture sont sains et à l'état "1" si tous les contacts auxiliaires fermeture sont défaillants,
- les n contacts auxiliaires fermeture sont sains et à l'état "0" si tous les contacts auxiliaires ouverture sont défaillants

6. Méthode selon l'une des revendications 2 à 5, caractérisé en ce que le programme est agencé pour qu'à l'état de veille, une information "appareil fermé" soit donnée lorsque l'un des cas ci-après est présent:
- au moins un contact auxiliaire fermeture est sain et à l'état "1"
- au moins un contact auxiliaire ouverture est sain et à l'état "0".

7. Méthode selon l'une des revendications 1 à 6, caractérisé en ce que le programme est agencé pour verrouiller l'appareil en position "appareil ouvert" et pour signaler "appareil défaillant", lorsque l'état des contacts auxiliaires ne correspond à aucun des cas permettant d'afficher "appareil ouvert".

8. Méthode selon l'une des revendications 2 à 7, caractérisé en ce que le programme est agencé pour verrouiller l'appareil en position "appareil fermé " et pour signaler "appareil défaillant", lorsque l'état des contacts auxiliaires ne correspond à aucun des cas permettant d'afficher "appareil fermé".

9. Méthode selon l'une des revendications 2 à 8, caractérisé en ce que le programme est élaboré de manière que:
- lorsqu'un ordre d'ouverture (OO) ou de fermeture (OF) est donné au temps origine (t0), une première fenêtre temporelle de surveillance ayant une première durée (TIME0) est lancée par un premier temporisateur (TEMPO1) et conjointement un premier chronomètre (CHRO0) est démarré,
- lorsque le premier des contacts auxiliaires d'un premier groupe change d'état (un contact signal ouverture pour un ordre d'ouverture et un contact signal fermeture pour un ordre de fermeture) à l'instant t1, une seconde fenêtre temporelle ayant une seconde durée (TIME1) à l'aide d'un second temporisateur (TEMPO1) est ouverte et, simultanément, on stoppe le premier chronomètre (CHRO0), on met en mémoire la durée qu'il indique correspondant à la durée de décollage à partir du repos, et on démarre un second chronomètre (CHR1),
- à l'expiration de la seconde durée (TIME1), à l'instant t2, les contacts auxiliaires dudit premier groupe ont pu changer d'état et ces états résultants sont mémorisés pour être analysés,
- lorsque le premier contact signal du second groupe change d'état à l'instant t3, ladite seconde fenêtre temporelle de seconde durée (TIME1) est relancée à l'aide dudit second temporisateur (TEMPO1) et conjointement, on stoppe le second chronomètre (CHR1) et on met en mémoire la durée qu'il indique utilisable pour déterminer la vitesse moyenne des contacts de l'appareillage,
- à l'expiration du second délai (TIME1), tous les contacts auxiliaires valides du second groupe ont pu changer d'état, et les états résultants sont mémorisés pour être analysés,
- un contact auxiliaire du premier ou du second groupe étant déclaré défaillant si, au terme de la seconde fenêtre temporelle (TIME1) y relative, il n'a pas changé d'état,
- un groupe de contact auxiliaires étant déclaré en défaillance majeure si, au terme de la première fenêtre temporelle (TIME0), aucun des contacts auxiliaire de ce groupe n'a changé d'état alors qu'un changement d'état convenable a été constaté dans le groupe opposé.

10. Méthode selon l'une des revendications 2 à 9, caractérisé en ce que le programme comprend un premier sous-programme de marche dégradée (marche dégradée 1), qui:
- lors d'un processus d'ouverture de l'appareil, après avoir constaté que la séquence a été initiée par le changement d'état d'un contact auxiliaire fermeture et qu'aucun des contacts auxiliaires ouverture n'a changé d'état à l'issue de la première fenêtre temporelle (TIME0), entraîne l'apparition d'un signal de défaillance de l'appareil (MFP = 1),
- lors d'un processus d'ouverture de l'appareil, après avoir constaté que la séquence n'a pas été initiée par le non changement d'état à l'issue de la première fenêtre temporelle des contacts auxiliaires fermeture, entraînera l'apparition d'un signal "appareil ouvert" (PO = 1) si les trois contacts auxiliaires ouverture ont changé d'état,et conjointement, on signale la défaillance majeure des contacts auxiliaires fermeture (MACAF = 1, MFCA = 1),
- lors d'un processus d'ouverture de l'appareil, après avoir constaté que la séquence n'a pas été initiée par le non changement d'état à l'issue de la première fenêtre temporelle des contacts auxiliaires fermeture, et ayant constaté le non changement d'état des contacts auxiliaire ouverture sains, entraînera l'apparition d'un signal de défaillance de l'appareil (MFP = 1) et de verrouillage de toute ordre ultérieur,
- lors d'un processus de fermeture de l'appareil, après avoir constaté que la séquence a été initiée par le changement d'état d'un contact auxiliaire ouverture et qu'aucun des contacts auxiliaires fermeture n'a changé d'état à l'issue de la première fenêtre temporelle (TIME0), entraîne l'apparition du signal "appareil fermé", la seconde durée étant prise égale à la durée de la première fenêtre temporelle (TIME0),
- lors d'un processus de fermeture de l'appareil, après avoir constaté une défaillance majeure des contacts auxiliaire fermeture, entraîne l'apparition d'un signal "appareil fermé" si l'un des contacts auxiliaires ouverture a changé d'état,
- lors d'un processus de fermeture de l'appareil, après avoir constaté une défaillance majeure des contacts auxiliaires fermeture, et constaté qu'aucun des contacts signaux ouverture sains n'a changé d'état, déclarera "appareil défaillant" , prendra la première durée (T1) égale à la durée de la première fenêtre temporelle (TIME0), prendra la seconde durée (T2) égale à la capacité maximale dudit troisième chronomètre (FFFF) et commandera la mise en route d'un troisième programme de marche dégradée ("marche dégradée 3).

11. Méthode selon l'une des revendications 2 à 10, caractérisé en ce que le programme comprend un second sous-programme de marche dégradée ("marche dégradée2"), pour déterminer la position de l'appareil à l'état de veille, lorsque tous les contacts auxiliaires ouverture et/ou tous les contacts auxiliaires fermeture sont défaillants, ledit second sous-programme étant agencé pour que:
- le dernier ordre donné enregistré étant un ordre d'ouverture, le dispositif ne confirme l'état "appareil ouvert" que si au moins tous les contacts auxiliaires d'un groupe sont sains,
- le dernier ordre donné enregistré étant un ordre de fermeture, le dispositif indique "appareil fermé" si au moins un contact auxiliaire fermeture sain est à "1" ou si au moins un contact auxiliaire ouverture sain est à "0",
- si tous les contacts auxiliaires ouverture et tous les contacts auxiliaires fermeture sont défaillants, le dispositif indique "appareil défaillant" et condamne toute manoeuvre ultérieure.

12. Méthode selon l'une des revendications 2 à 11, caractérisé en ce que le programme comporte un troisième sous-programme de marche dégradée "marche dégradée3", pour détecter les défaillances de l'appareil et commander des verrouillages de tous les ordres ultérieurs et la signalisation "appareil défaillant".

13. Méthode selon l'une des revendications 2 à 11, caractérisé en ce que le nombre n de contacts auxiliaires de chaque groupe est égal à 3.

## Patentansprüche

1. Verfahren zur Erarbeitung eines Signals, das den Zustand eines Geräts bestimmt, das einen ersten und einen zweiten Zustand einnehmen kann, wobei das Gerät mit mindestens einem Hilfskontakt des ersten Zustands, der ein Zustandssignal "1" liefert, wenn das Gerät sich im ersten Zustand befindet, und mit mindestens einem zweiten Hilfskontakt ausgestattet ist, der Hilfskontakt des zweiten Zustands genannt wird und ein Zustandssignal "1" liefert, wenn das Gerät sich im zweiten Zustand befindet, wobei das Gerät einem programmierten Mikrokontrollorgan zugeordnet ist, das an Eingängen die Zustandssignale der Hilfskontakte und die Befehle empfängt, die den Übergang von einem Zustand zum anderen fordern, und das am Ausgang ein Signal liefert, das für den Zustand und/oder die Verfügbarkeit des Geräts repräsentativ ist, dadurch gekennzeichnet, daß dieses Signal von einem Programm zur Anwendung einer Betriebskontinuitätsstrategie und der Verwendungssicherheit des Geräts erarbeitet wird, wobei die Software sich auf die folgenden Bedingungen stützt:
- wenn ein Hilfskontakt den Zustand wechselt, ohne daß ein Befehl zur Zustandsänderung an das Mikrokontrollorgan übertragen wird, betrachtet dieses den Hilfskontakt als fehlerhaft und berücksichtigt seine Anzeige nicht mehr,
- wenn nach der Übertragung eines Zustandsänderungsbefehls an das Mikrokontrollorgan ein Hilfskontakt seinen Zustand nicht in einem gegebenen Zeitraum geändert hat, betrachtet ihn das Mikrokontrollorgan als fehlerhaft und berücksichtigt seine Anzeige nicht mehr,
wobei die Software außerdem die Zustände der betriebstüchtigen Hilfskontakte berücksichtigt, wie sie zum Zeitpunkt der Zustandsänderung erscheinen, sowie den Befehl zur Zustandsänderung selbst.

2. Methode zur Bestimmung des Zustands eines elektrischen Schaltgeräts wie eines Lastschalters oder eines Trennschalters mit einem Pol je Phase zum Gegenstand, das für jeden Pol Hilfskontakte aufweist, die numerische Binärsignale liefern, d.h. ein Signal "1", wenn der Hilfskontakt in einer Position entsprechend dem offenen oder geschlossen Zustand des Geräts ist, und ein Signal "0", wenn der Hilfskontakt seine Position verläßt, wobei der Pol über eine Öffnungsspule und eine Schließspule betätigt wird und das Gerät für jeden Pol eine erste und eine zweite Gruppe von n Hilfskontakten aufweist, wobei n eine ganze Zahl mindestens gleich 2 ist, wobei die Hilfskontakte (CAO1, CAO2, CAO3) der ersten Gruppe, die Öffnungs-Hilfskontakte genannt werden, ein Signal "1" liefern, wenn sie eine offene Position des Geräts erfassen, während die Hilfskontakte (CAF1, CAF2, CAF3) der zweiten Gruppe, die Schließ-Signalkontakte genannt werden, ein "1" liefern, wenn sie eine geschlossene Position des Geräts erfassen, wobei die Hilfskontakte mit einem programmierten Mikroprozessor (MP) verbunden sind, der ebenfalls eine Information (00) entsprechend einem Befehl zum Öffnen des Geräts und eine Information (OF) entsprechend einem Befehl zum Schließen des Geräts empfängt, wobei der Mikroprozessor einen Ausgang (CDO) zur Steuerung der Öffnungsspule des Pols, einen Ausgang (CDF) der Steuerung der Schließspule des Pols, einen Ausgang (PF), der ein Signal "Gerät geschlossen" liefert, einen Ausgang (PO), der ein Signal "Gerät offen" liefert, Ausgänge (MACAO, MACAF), die Angaben über die Verfügbarkeit der Hilfskontakte der ersten und der zweiten Gruppe liefern, einen Ausgang (MFCA), der ein Signal liefert, das einen größeren Fehler einer der Gruppe von Hilfskontakten anzeigt, und einen Ausgang (MFP) aufweist, der eine Information liefert, die den größeren Fehler des Pols anzeigt, wobei die Strategie des Programms derart angelegt ist, daß
- ein Hilfskontakt, der nach einem Öffnungs- oder Schließbefehl in einem gegebenen Zeitraum seinen Zustand nicht geändert hat, als fehlerhaft angesehen und vom Programm nicht mehr berücksichtigt wird,
- ein Gerät am Ende der Öffnungsphase als offen erklärt wird, wenn nach dieser Öffnungsphase einer der folgenden Fälle auftritt:
- die n Schließ-Hilfskontakte und die n Öffnungs-Hilfskontakte sind betriebstüchtig und haben in geeigneter Weise ihren Zustand geändert, wobei ein öffnungs-Hilfskontakt von "1" nach "0" und ein Schließ-Hilfskontakt von "0" nach "1" geht,
- mindestens ein Schließ-Hilfskontakt ist betriebstüchtig und mindestens ein Öffnungs-Hilfskontakt hat in geeigneter Weise seinen Zustand gewechselt,
- die n betriebstüchtigen Öffnungs-Hilfskontakte haben ihren Zustand gewechselt, während die n Schließ-Hilfskontakte alle defekt sind (größerer Fehler der Hilfskontakte entsprechend der Aussendung eines Signals MCFA = 1),
- die n betriebstüchtigen Schließ-Hilfskontakte haben ihren Zustand gewechselt, während die n Öffnungs-Hilfskon-takte alle defekt sind (größerer Fehler der Hilfskontakte entsprechend der Aussendung eines Signals MCFA = 1),
- ein Gerät wird am Ende der Schließphase als geschlossen erklärt, wenn nach dieser Schließphase einer der folgenden Fälle auftritt:
- mindestens ein betriebstüchtiger Öffnungs-Hilfskontakt hat den Zustand gewechselt bei einem Ausfall aller Schließ-Hilfskontakte während des Betriebs,
- mindestens ein betriebstüchtiger Schließ-Hilfskontakt hat den Zustand gewechselt bei einem Ausfall aller Öffnungs-Hilfskontakte während des Betriebs,
wobei das Programm außerdem
- eine Gruppe von Kontakten als fehlerhaft erklärt (größerer Fehler einer Gruppe von Hilfskontakten entsprechend einem Signal MFCA = 1), wenn bei einer Öffnungs- oder Schließbetätigung des Geräts keiner der Hilfskontakte der Gruppe den Zustand nach einer ersten Zeitverzögerung (TIME0) nach dem Betätigungsbefehl gewechselt hat, während im gleichen Zeitraum ein richtiger Wechsel der Hilfskontakte der anderen Gruppe beobachtet wurde,
- einen Hilfskontakt als nicht betriebstüchtig erklärt wird, wenn während einer Öffnungs- oder Schließphase des Geräts, nachdem ein Hilfskontakt der gleichen Gruppe korrekt den Zustand gewechselt hat, er nicht nach einer zweiten Verzögerung (TIME1), die von der vorhergehenden Zustandsänderung initiiert wurde, den Zustand gewechselt hat.

3. Methode nach einem der Ansprüche 1 und 2, dadurch gekennzeichnet, daß die Hilfskontakte (CAO1, CAO2, CAO3, CAF1, CAF2, CAF3) mit Selbstdiagnose-Mitteln versehen sind und Signale (ADO1, ADO2, ADO3, ADF1, ADF2, ADF3) liefern, die an Eingänge des Mikrokontrollorgan gerichtet sind.

4. Methode nach einem der Ansprüche 2 und 3, dadurch gekennzeichnet, daß das Programm so ausgelegt ist, daß im Überwachungszustand eine Information "Gerät offen" ausgegeben wird, wenn einer der nachfolgenden Fälle vorliegt:
- die n Öffnungs-Hilfskontakte sind betriebstüchtig und im Zustand "1", die n Schließ-Hilfskontakte sind betriebstüchtig und im Zustand "0",
- mindestens ein Öffnungs-Hilfskontakt ist betriebstüchtig und im Zustand "1" und mindestens ein Schließ-Hilfskontakt ist betriebstüchtig und im Zustand "0",
- die n Öffnungs-Hilfskontakte sind betriebstüchtig und im Zustand "1", wenn alle Schließ-Hilfskontakte ausgefallen sind,
- die n Schließ-Hilfskontakte sind betriebstüchtig und im Zustand "0", wenn alle Öffnungs-Hilfskontakte ausgefallen sind.

5. Methode nach einem der Ansprüche 2 bis 4, dadurch gekennzeichnet, daß das Programm so ausgelegt ist, daß im Überwachungszustand eine Information "Gerät offen" ausgegeben wird, wenn einer der nachfolgenden Fälle vorliegt:
- die n Öffnungs-Hilfskontakte sind betriebstüchtig und im Zustand "1", die n Schließ-Hilfskontakte sind betriebstüchtig und im Zustand "0",
- mindestens ein Öffnungs-Hilfskontakt ist betriebstüchtig und im Zustand "1" und mindestens ein Schließ-Hilfskontakt ist betriebstüchtig und im Zustand "0",
- die n Öffnungs-Hilfskontakte sind betriebstüchtig und im Zustand "1", wenn alle Schließ-Hilfskontakte fehlerhaft sind,
- die n Schließ-Hilfskontakte sind betriebstüchtig und im Zustand "0", wenn alle Öffnungs-Hilfskontakte fehlerhaft sind.

6. Methode nach einem der Ansprüche 2 bis 5, dadurch gekennzeichnet, daß das Programm so ausgelegt ist, daß im Überwachungszustand eine Information "Gerät geschlossen" ausgegeben wird, wenn einer der nachfolgenden Fälle vorliegt:
- mindestens ein Schließ-Hilfskontakt ist betriebstüchtig und im Zustand "1",
- mindestens ein Öffnungs-Hilfskontakt ist betriebstüchtig und im Zustand "0".

7. Methode nach einem der Ansprüche 1 bis 6, dadurch gekennzeichnet, daß das Programm ausgelegt ist, um das Gerät in der Position "Gerät offen" zu verriegeln und um die Meldung "Gerät fehlerhaft" abzugeben, wenn der Zustand der Hilfskontakte keinem der Fälle entspricht, die die Anzeige "Gerät offen" erlauben.

8. Methode nach einem der Ansprüche 2 bis 7, dadurch gekennzeichnet, daß das Programm so ausgelegt ist, daß das Gerät in der Position "Gerät geschlossen" verriegelt und die Meldung "Gerät fehlerhaft" signalisiert wird, wenn der Zustand der Hilfskontakte keinem der Fälle entspricht, die die Anzeige "Gerät geschlossen" erlauben.

9. Methode nach einem der Ansprüche 2 bis 8, dadurch gekennzeichnet, daß das Programm so ausgelegt ist, daß
- ein erstes Überwachungs-Zeitfenster mit einer ersten Dauer (TIME0) von einem ersten Verzögerungsglied (TEMPO1) ausgegeben und gleichzeitig ein erster Zeitmesser (Chro) gestartet wird, wenn ein Öffnungsbefehl (00) oder ein Schließbefehl (OF) zur Ursprungszeit (t0) ausgegeben wird,
- ein zweites Zeitfenster mit einer zweiten Dauer (TIME1) mit Hilfe eines zweiten Verzögerungsglieds (TEMPO1) geöffnet und gleichzeitig der erste Zeitmesser (Chr0) angehalten wird, wenn der erste der Hilfskontakte einer ersten Gruppe im ersten Zeitpunkt seinen Zustand ändert (ein Öffnungssignal-Kontakt für einen Öffnungsbefehl und ein Schließsignal-Kontakt für einen Schließbefehl), und die Dauer, die er angibt und die der Dauer des Abhebens ausgehend von der Ruhestellung entspricht, gespeichert wird, und ein zweiter Zeitmesser (Chr1) gestartet wird,
- am Ende der zweiten Dauer (TIME1), zum Zeitpunkt t2 die Hilfskontakte der ersten Gruppe ihren Zustand ändern können und diese entstandenen Zustände zu ihrer Analyse gespeichert werden,
- das zweite Zeitfenster der zweiten Dauer (TIME1) mit Hilfe des zweiten Verzögerungsglieds (TEMPO1) neu gestartet und gleichzeitig der zweite Zeitmesser (Chrl) angehalten wird und die Dauer, die er angibt, und die nutzbar ist, um die mittlere Geschwindigkeit der Kontakte der Einrichtung zu bestimmen, gespeichert wird, wenn der erste Signalkontakt der zweiten Gruppe im dritten Zeitpunkt (t3) seinen Zustand ändert,
- am Ende der zweiten Dauer (TIME1) alle gültigen Hilfskontakte der zweiten Gruppe ihren Zustand ändern konnten und die entstandenen Zustände zu ihrer Analyse gespeichert werden,
- ein Hilfskontakt der ersten oder der zweiten Gruppe als fehlerhaft erklärt wird, wenn er am Ende des zweiten, sich auf ihn beziehenden Zeitfensters (TIME1) seinen Zustand nicht geändert hat,
- eine Gruppe von Hilfskontakten als stark fehlerhaft erklärt wird, wenn am Ende des ersten Zeitfensters (TIME0) keiner der Hilfskontakte dieser Gruppe seinen Zustand geändert hat, während eine entsprechende Zustandsänderung in der entgegengesetzten Gruppe festgestellt wurde.

10. Methode nach einem der Ansprüche 2 bis 9, dadurch gekennzeichnet, daß das Programm ein erstes Unterprogramm für fehlerhaften Ablauf (fehlerhafter Ablauf 1) enthält,
- das bei einem Öffnungsprozeß des Geräts ein Fehlersignal des Geräts (MFP = 1) erzeugt, nachdem es festgestellt hat, daß die Öffnungsphase durch die Zustandsänderung eines Schließ-Hilfskontakts initiiert wurde, während keiner der Öffnungs-Hilfskontakte nach dem ersten Zeitfenster (TIME0) seinen Zustand geändert hat,
- das bei einem Öffnungsprozeß des Geräts, wenn es festgestellt hat, daß die Phase nicht von der fehlenden Zustandsänderung der Schließ-Hilfskontakte nach dem ersten Zeitfenster initiiert wurde, ein Signal "Gerät offen" (PO = 1) bewirkt, wenn die drei Öffnungs-Hilfskontakte den Zustand geändert haben, und das gleichzeitig die starke Fehlerhaftigkeit der Schließ-Hilfskontakte (MACAF = 1, MFCA = 1) anzeigt,
- das bei einem Öffnungsprozeß des Geräts, nachdem es festgestellt hat, daß die Öffnungsphase nicht durch die fehlende Zustandsänderung der Schließ-Hilfskontakt nach dem ersten Zeitfenster initiiert wurde, und nachdem es die fehlende Zustandsänderung der betriebstüchtigen Öffnungs-Hilfskontakte festgestellt hat, ein Fehlersignal des Geräts (MFP = 1) und ein Signals zur Verriegelung jedes späteren Befehls erzeugt,
- das bei einem Schließprozeß des Geräts, nachdem es festgestellt hat, daß die Schlußphase durch die Zustandsänderung eines Öffnungs-Hilfskontakts initiiert wurde und daß keiner der Schließ-Hilfskontakte nach dem ersten Zeitfenster (TIME0) seinen Zustand geändert hat, ein Signal "Gerät geschlossen" erzeugt, wobei die zweite Dauer gleich der Dauer des ersten Zeitfensters (TIME0) genommen wird,
- das bei einem Schließprozeß des Geräts, nachdem es einen großen Fehler der Schließ-Hilfskontakte ermittelt hat, ein Signal "Gerät geschlossen" erzeugt, wenn einer der Öffnungs-Hilfskontakte seinen Zustand geändert hat,
- das bei einem Schließprozeß des Geräts, wenn es einen großen Fehler der Schließ-Hilfskontakte festgestellt hat und festgestellt hat, daß keiner der betriebstüchtigen Öffnungs-Hilfskontakte seinen Zustand geändert hat, die Meldung "Gerät fehlerhaft" liefert, die erste Dauer (T1) gleich der Dauer des ersten Zeitfensters (TIME0) nimmt, die zweite Dauer (T2) gleich der maximalen Kapazität des dritten Zeitmessers (FFFF) nimmt und den Start eines dritten Programms des fehlerhaften Ablaufs ("fehlerhafter Ablauf 3") veranlaßt.

11. Methode nach einem der Ansprüche 2 bis 10, dadurch gekennzeichnet, daß das Programm ein zweites Unterprogramm des fehlerhaften Ablaufs ("fehlerhafter Ablauf 2") enthält, um die Position des Geräts im Überwachungszustand zu bestimmen, wenn alle Öffnungs-Hilfskontakte und/oder alle Schließ-Hilfskontakte defekt sind, wobei das zweite Unterprogramm so ausgelegt ist,
- daß die Vorrichtung den Zustand "Gerät offen" nur bestätigt, sofern der letzte gegebene registrierte Befehl ein Öffnungsbefehl ist, wenn mindestens alle Hilfskontakte einer Gruppe betriebstüchtig sind,
- daß die Vorrichtung "Gerät geschlossen" meldet, sofern der letzte gegebene registrierte Befehl ein Schließbefehl ist, wenn mindestens ein betriebstüchtiger Schließ-Hilfskontakt auf "1" ist oder wenn mindestens ein betriebstüchtiger Öffnungs-Hilfskontakt auf "0" ist,
- daß die Vorrichtung "Gerät defekt" meldet und jede weitere Betätigung verbietet, wenn alle Öffnungs-Hilfskontakte und alle Schließ-Hilfskontakte defekt sind.

12. Methode nach einem der Ansprüche 2 bis 11, dadurch gekennzeichnet, daß das Programm ein drittes Unterprogramm des fehlerhaften Ablaufs "fehlerhafter Ablauf 3" enthält, um die Fehler des Geräts zu erfassen und Verriegelungen aller weiteren Befehle und die Meldung "Gerät fehlerhaft" zu veranlassen.

13. Methode nach einem der Ansprüche 2 bis 11, dadurch gekennzeichnet, daß die Zahl n der Hilfskontakte jeder Gruppe gleich 3 ist.

## Claims

1. A method of generating a signal for determining the state of apparatus capable of taking up a first state and a second state, the apparatus being provided with at least one "first state" auxiliary contact providing a "1" state signal when the apparatus is in its first state, and with at least one "second state" auxiliary contact providing a "1" state signal when the apparatus is in its second state, the apparatus being associated with a programmed microcontroller receiving the state signals from the auxiliary contacts on inputs thereof, and also receiving instructions requesting the apparatus to switch from one state to the other, and providing an output signal representative of the state and/or of the availability of the apparatus, the method being characterized in that said signal is generated by a program for implementing a strategy for obtaining continuity of service and utilization safety for the apparatus, the software relying on the following conditions:
if an auxiliary contact changes state without a state changing instruction being issued by the microcontroller, then the microcontroller considers that the auxiliary contact is faulty and no longer takes its signals into account; and
if after a change of state instruction has been issued by the microcontroller an auxiliary contact does not change state in a given time delay, then the microcontroller considers it to be faulty and does not take signals from it into account;
the software also taking account of the states of good auxiliary contacts as they appear at the instant when a change of state instruction is issued, and the change of state instruction itself.

2. A method of determining the position of an electrical cut-out apparatus such as a circuit breaker or a section switch having one pole per phase, and including for each of said poles auxiliary contacts that provide digital binary signals, namely a "1" signal when the auxiliary contact is in a position that corresponds to the apparatus being in an open state or in a closed state, and a "0" signal when the auxiliary contact leaves its position, said pole being driven via an open coil and a close coil, the apparatus comprising for each pole a first group and a second group each of n auxiliary contacts, where n is an integer of not less than 2, the "open auxiliary contacts" (CAO1, CAO2, CAO3) of the first group providing a "1" signal when they detect the apparatus to be in an open position, the "closed auxiliary contacts" (CAF1, CAF2, CAF3) of the second group providing a "1" signal when they detect the apparatus to be in a closed position, the said auxiliary contacts being connected to a programmed microprocessor (MP) that also receives a signal (OO) corresponding to an open instruction for the apparatus, and a signal (OF) corresponding to a close instruction for the apparatus, said microprocessor having an output (CDO) for controlling the open coil of the pole, an output (CDF) for controlling the close coil of the pole, an output (PF) providing an "apparatus closed" signal, an output (PO) for providing an "apparatus open" signal, outputs (MACAO, MACAF) for providing signals concerning the availability of the auxiliary contacts,in the first and second groups, an output (MFCA) for providing a signal indicating a major fault in one of the auxiliary contact groups, and an output (MFP) for providing a signal indicating a major failure of the pole, the strategy of the program being established so that:
an auxiliary contact which does not change state within a given time delay following an open or a close instruction is considered as being faulty and is no longer taken into consideration by the program;
an apparatus is declared to be opened at the end of an open sequence if one of the following situations occurs at the end of said opening sequence:
all n closed auxiliary contacts and all n open auxiliary contacts are good and have changed state appropriately, with open auxiliary contacts changing from "1" to "0", and closed auxiliary contacts changing from "0" to "1";
at least one closed auxiliary contact is good and at least one open auxiliary contact has changed state appropriately;
all n good open auxiliary contacts have changed state while the n closed auxiliary contacts are all faulty (a major auxiliary contact failure corresponding to a signal MCFA = 1 being issued); and
all n good closed auxiliary contacts have changed state while the n open auxiliary contacts are all faulty (a major auxiliary contact failure corresponding to a signal MCFA = 1 being issued);
an apparatus is declared to be closed at the end of the close sequence if one of the following circumstances arises at the end of said close sequence:
at least one good open auxiliary contact has changed state in the event of all of the closed auxiliary contacts failing during the operation; and
at least one good closed auxiliary contact has changed state in the event of all of the open auxiliary contacts failing during the operation;
the program also being organized so that:
a group of contacts is declared faulty (a major auxiliary contact group failure corresponding to an MFCA = 1 signal) if none of the auxiliary contacts of the group has changed state during a first time delay (TIME0) following an instruction to open or close the apparatus, and while during the same time lapse an appropriate change is observed for the auxiliary contacts of the other group; and
an auxiliary contact is declared faulty if it has not changed state at the end of a second time delay (TIME1), initiated by another auxiliary contact of the same group changing state appropriately during an open sequence or a close sequence of the apparatus.

3. A method according to claim 1 or 2, characterized in that the auxiliary contacts (CAO1, CAO2, CAO3, CAF1, CAF2, CAF3) are provided with self-diagnosis means and provide signals (ADO1, ADO2, ADO3, ADF1, ADF2, ADF3) addressed to inputs of the microcontroller.

4. A method according to claim 2 or 3, characterized in that the program is organized so that in the standby state, an "apparatus open" signal is given when one of the following circumstances arises:
the n open auxiliary contacts are good and in the "1" state and the n closed auxiliary contacts are good and in the "0" state;
at least one open auxiliary contact is good and in the "1" state and at least one closed auxiliary contact is good and in the "0" state;
the n open auxiliary contacts are good and in the "1" state if all of the closed auxiliary contacts are faulty; and
the n closed auxiliary contacts are good and in the "0" state if all the closed auxiliary contacts are faulty.
Advantageously, the auxiliary contacts are provided with self-diagnosis means and provide signals (ADO1, ADO2, ADO3, ADF1, ADF2, ADF3) addressed to inputs of the microcontroller.

5. A method according to any one of claims 2 to 4, characterized in that the program is organized so that in the standby state, an "apparatus open" signal is given when one of the following circumstances arises:
the n open auxiliary contacts are good and in the "1" state and the n closed auxiliary contacts are good and in the "0" state;
at least one open auxiliary contact is good and in the "1" state and at least one closed auxiliary contact is good and in the "0" state;
the n open auxiliary contacts are good and in the "1" state if all of the closed auxiliary contacts are faulty; and
the n closed auxiliary contacts are good and in the "0" state if all the closed auxiliary contacts are faulty.

6. A method according to any one of claims 2 to 5, characterized in that the program is organized so that in the standby state, an "apparatus closed" signal is issued so long as one of the following circumstances is present:
at least one closed auxiliary contact is good and in the "1" state; and
at least one of the open auxiliary contacts is good and in the "0" state.

7. A method according to any one of claims 1 to 6, characterized in that the program is organized to lock the apparatus in the "apparatus open" position and to issue an "apparatus faulty" signal whenever the state of the auxiliary contacts corresponds to none of the circumstances allowing it to issue an "apparatus open" signal.

8. A method according to any one of claims 2 to 7, characterized in that the program is organized to lock the apparatus in an "apparatus closed" position and to issue a "apparatus faulty" signal whenever the state of the auxiliary contacts corresponds to none of the circumstances enabling it to issue an "apparatus closed" signal.

9. A method according to any one of claims 2 to 8, characterized in that the program is organized in such a manner that:
when an open or a close instruction (OO, OF) is given at time origin (t0), a first surveillance time window having a first duration (TIME0) is initiated by a first time delay (TEMPO1), and simultaneously a first timer (CHRO0) is started;
when the first of the auxiliary contacts of a first group changes state (an open auxiliary contact for an open instruction or a closed auxiliary contact for a close instruction) at an instant tl, a second time window having a second duration (TIME1) is opened by means of a second time delay (TEMPO1) and simultaneously the first timer (CHRO0) is stopped, the time it provides is stored in a memory, which time corresponds to the starting time from rest, and a second timer (CHR1) is started;
at the end of the second time duration (TIME1), at instant t2, the auxiliary contacts of said first group have had the chance to change state, and the resulting states thereof are stored in order to be analyzed;
when the first signal contact of the second group changes state at instant t3, said second time window of the second duration (TIME1) is started again using said second time delay (TEMPO1) and simultaneously the second timer (CHR1) is stopped and the time it provides is stored and is suitable for use in determining the mean speed of the contacts of the equipment;
when the second time delay expires (TIME1), all of the good auxiliary contacts in the second group will have changed state, and the resulting states are stored in order to be analyzed;
an auxiliary contact in the first group or in the second group is declared to be faulty if it has not changed state at the end of the second time window (TIME1) relating thereto; and
a group of auxiliary contacts is declared to be suffering from a major fault if none of the auxiliary contacts in the group has changed state by the end of the first time window (TIME0) when an appropriate change of state has been observed in the opposite group.

10. A method according to any one of claims 2 to 9, characterized in that the program includes a first fault mode subprogram (fault mode 1) which:
during an apparatus opening process, after observing that the sequence has been initiated by a change in the state of a closed auxiliary contact and that none of the open auxiliary contacts has changed state at the end of the first time window (TIME0), causes an apparatus fault signal (MFP = 1) to appear;
during an apparatus opening process, after observing that the sequence has not been initiated because none of the closed auxiliary contacts has changed state at the end of the first time window, causes an "apparatus open" signal (PO = 1) to appear if all three open auxiliary contacts have not changed state, and simultaneously issues a major fault signal concerning the closed auxiliary contacts (MACAF = 1, MFCA = 1);
during an apparatus opening process, after observing that the sequence has not been initiated because none of the closed auxiliary contacts has changed state at the end of the first time window, and having observed no change of state in the good open auxiliary contacts, causes an apparatus failure signal (MFP = 1) to appear and locks out any subsequent instruction;
during an apparatus closing process, after observing that the sequence has been initiated by an open auxiliary contact changing state and observing that none of the closed auxiliary contacts has changed state at the end of the first time window (TIME0), causes an "apparatus closed" signal to appear, with the second duration being taken to be equal to the duration of the first time window (TIME0);
during an apparatus closing process, after observing a major fault of the closed auxiliary contacts, causes an "apparatus closed" signal to appear if one of the open auxiliary contacts changes state;
during an apparatus closing process, after observing a major fault of the closed auxiliary contacts, and after observing that none of the good open auxiliary contacts has changed state, declares the apparatus to be faulty, takes the first duration (T1) to be equal to the duration of the first time window (TIME0), takes the second duration (T2) to be equal to the maximum capacity of said third timer (FFFF), and causes a third fault mode program (fault mode 3) to be run.

11. A method according to any one of claims 2 to 10, characterized in that the program includes a second fault mode subprogram (fault mode 2) for determining the position of the apparatus in its standby state when all of the open auxiliary contacts and/or all of the closed auxiliary contacts are faulty, said second subprogram being organized so that:
the last recorded given instruction being an open instruction, the device confirms the "apparatus open" state only if at least all of the auxiliary contacts in one of the groups are good;
the last recorded given instruction being a close instruction, the device indicates that the apparatus is closed if at least one good closed auxiliary contact is in the "1" state or if at least one good open auxiliary contact is in the "0" state; and
if all of the open auxiliary contacts and all of the closed auxiliary contacts are faulty, the device indicates that the apparatus is faulty and prevents any subsequent operation thereof.

12. A method according to any one of claims 2 to 11, characterized in that the program includes a third fault mode subprogram (fault mode 3) for detecting faults of the apparatus and for locking out all subsequent instructions, and for issuing a "apparatus faulty" signal.

13. A method according to any one of claims 2 to 11, characterized in that the number n of auxiliary contacts in each group is equal to 3.
